Europäisches Patentamt

European Patent Office

Office européen des brevets

(19)

(11) Numéro de publication: **0 070 774**
**A1**

(12) ## DEMANDE DE BREVET EUROPEEN

(21) Numéro de dépôt: **82401330.4**

(22) Date de dépôt: **16.07.82**

(51) Int. Cl.³: **B 23 K 35/00**, E 01 B 7/12,
C 22 C 38/04, C 22 C 38/40,
C 22 C 38/58

(30) Priorité: **17.07.81 FR 8113940**

(71) Demandeur: **CREUSOT-LOIRE, 42 rue d'Anjou,
F-75008 Paris (FR)**

(43) Date de publication de la demande: **26.01.83**
**Bulletin 83/4**

(72) Inventeur: **Pichard, Claude, 41 rue Danton,
F-42240 Unieux (FR)**

(84) Etats contractants désignés: **AT BE CH DE FR GB IT LI
LU NL SE**

(74) Mandataire: **Bouget, Lucien et al,
CREUSOT-LOIRE 15 rue Pasquier, F-75383 Paris
Cedex 08 (FR)**

(54) **Procédé de fabrication d'un appareil de voie en acier au manganèse et procédé de raccordement de cet appareil de voie à des rails en acier au carbone.**

(57) L'invention concerne un appareil de voie et un procédé de raccordement de cet appareil de voie à des rails.

L'appareil de voie est en un acier moulé contenant 0,7 à 0,9% de carbone, moins de 1% de silicium, de 13 à 15% de manganèse et de 1 à 1,8% de molybdène. Il comporte des pièces de raccordement en un acier contenant principalement du chrome, du nickel et du manganèse. La fabrication par moulage de l'appareil de voie et son raccordement aux pièces d'extrémité et aux rails, par soudage, ne fragilisent pas l'acier de cet appareil de voie. On peut donc effectuer ces opérations sans qu'elles soient suivies d'une hyper-trempe.

L'invention s'applique, en particulier, à la fabrication et au soudage des cœurs de croisement sur des voies ferrées.

"Procédé de fabrication d'un
appareil de voie en acier au manganèse et procédé de raccordement
de cet appareil de voie à des rails en acier au carbone"

L'invention concerne un procédé de fabrication d'un appareil de voie en acier au manganèse moulé et un procédé de raccordement d'un appareil de voie obtenu par ce procédé à des rails en acier au carbone.

Pour le raccordement d'un appareil de voie en acier au manganèse moulé à des rails en acier au carbone, il est connu d'utiliser des éléments de raccordement ayant une section de même profil que le rail à raccorder et que les extrémités libres des files de roulement de l'appareil de voie, soudés bout à bout à l'extrémité des files de roulement de l'appareil de voie.

L'appareil de voie muni de ces éléments de raccordement peut être soudé ensuite aux rails en acier au carbone au niveau des extrémités libres des éléments de raccordement.

Une telle technique de raccordement et l'appareil de voie correspondant ont par exemple été décrits dans le brevet FR - A - 2.346.495 déposé par la Société Creusot-Loire et dans le certificat d'addition 2.350.424 à ce brevet.

L'appareil de voie en acier au manganèse moulé contenant environ 1,2 % de carbone et 12 % de manganèse est relié par soudage à des éléments de raccordement en un acier contenant principalement du chrome, du nickel et du manganèse.

Il est nécessaire dans ce cas de faire subir aux coeurs de voie un traitement d'hypertrempe avant de souder les éléments de raccordement et de faire également subir un traitement d'hypertrempe à l'appareil de voie après soudure des éléments de raccordement et avant de réaliser son raccordement aux rails en acier au carbone.

De tels traitements thermiques compliquent les opérations de fabrication de l'appareil de voie et de raccordement de cet appareil aux rails sur lesquels on doit le placer.

En outre, la longueur des éléments de raccordement doit être choisie de façon que le coeur de voie en acier au manganèse subisse une sensibilisation et une fragilisation la plus faible possible au cours des opérations de soudage des rails en acier au carbone sur les éléments de raccordement.

On connait également un acier contenant 0,7 à 0,9 % de carbone, moins de 1 % de silicium, de 13 à 15 % de manganèse et de 1 à 1,8 % de molybdène en plus du fer et des impuretés inévitables. Cet acier permet d'obtenir les caractéristiques mécaniques de l'acier à 12 % de manganèse hyper-trempé, à l'état brut de moulage (FR - A - 2.407.987). On n'a cependant jamais utilisé un tel acier pour la fabrication d'appareils de voie comportant des éléments de raccordement soudés.

Le but de l'invention est donc de proposer un procédé de fabrication d'un appareil de voie en acier au manganèse moulé destiné à être raccordé à des rails en acier au carbone au moyen d'éléments de raccordement soudés à l'appareil dans lequel les extrémités libres des files de roulement de l'appareil et l'élément de raccordement ont une section de même profil que le rail à raccorder, procédé de fabrication qui soit/plus facile à mettre en oeuvre que les procédés antérieurs, grâce à la suppression de tout traitement thermique.

Dans ce but, on réalise l'appareil de voie par moulage d'un acier contenant 0,7 à 0,9 % de carbone, moins de 1 % de silicium, de 13 à 15 % de manganèse et de 1 à 1,8 % de molybdène en plus du fer et des impuretés inévitables, et on soude à l'extrémité des files de roulement de l'appareil de voie, à l'état brut de moulage, des éléments de raccordement en un acier contenant principalement du chrome, du nickel et du manganèse, l'appareil de voie étant alors dans un état permettant son raccordement aux rails, sans traitement thermique ultérieur à l'opération de soudage des éléments de raccordement.

L'invention est également relative à un procédé de raccordement d'un appareil de voie obtenu par le procédé de fabrication de l'invention qui consiste à : souder les éléments de raccordement de l'appareil de voie aux rails sans opérer de traitement thermique ni avant ni après cette opération de soudage sur l'appareil de voie.

Afin de bien faire comprendre l'invention, on va maintenant décrire à titre d'exemple non limitatif le procédé de fabrication d'un appareil de voie suivant l'invention et une opération de raccordement de l'appareil obtenu sur des rails en acier au carbone.

On élabore, par moulage, un coeur de croisement tel que décrit et représenté dans le brevet 2.346.495 mais en utilisant à la place d'un acier à 1,2 % de carbone et à 12 % de manganèse, un acier à 0,78 % de carbone, 14 % de manganèse, 0,27 % de silicium et 1,26 % de molybdène.

Après moulage, le coeur de croisement ne subit aucun traitement thermique, l'acier au manganèse suivant la composition mentionnée ci-dessus présentant une très bonne résilience à l'état brut de moulage. Cette résilience est même supérieure à celle de l'acier usuel à 1,2 % de carbone et 12 % de manganèse, après hypertrempe.

On élabore et on soude à l'extrémité des files de roulement de l'appareil de voie à l'état brut de moulage, des pièces de raccordement en acier au chrome-nickel-manganèse renfermant de 0 à 0,15 % de carbone, 0,5 à 1,5% de manganèse, 0 à 1 % de silicium, 19 à 22 % de nickel, 24 à 28 % de chrome et 0 à 0,5 % de molybdène par soudage vertical sous laitier. Ces pièces de raccordement ont une longueur comprise entre 20 et 100 mm et une section identique à la section des rails et de l'extrémité des files de roulement du coeur de croisement.

L'appareil de voie est alors prêt à être relié par soudage aux rails en acier au carbone de la voie sur laquelle on doit venir le placer.

Un traitement d'hypertrempe de l'ensemble coeur de croisement-éléments de raccordement n'est plus nécessaire, puisque l'acier au manganèse constituant le coeur de croisement n'est pas sensibilisé ni fragilisé par les traitements de soudage.

On effectue donc le soudage des éléments de raccordement sur les rails par exemple par étincelage sans traitement thermique intermédiaire.

On a également réalisé des ensembles soudés dans les mêmes nuances ayant une section carrée de 30 mm de côté. Ces barreaux carrés ont subi un essai de chocs normalisés au mouton vertical de 50 Kg et l'on a observé une absence de rupture et de fissuration du barreau après trois chocs successifs du mouton tombant d'une hauteur de 3 mètres.

On a également effectué des observations sur des coupes réalisées sur les pièces soudées qui ont montré l'aspect parfaitement sain du métal ainsi que l'absence de précipitations de carbure dans l'acier austénitique au manganèse destiné à la fabrication du coeur de croisement, après soudage avec l'élément de raccordement.

Des essais d'usure ont également montré que l'appareil de voie est tout à fait conforme aux spécifications habituelles.

Des essais sur l'appareil de voie et sur une éprouvette en forme de barreau carré ont donc montré que, malgré le fait qu'aucun traitement thermique n'est pratiqué avant ou après soudage du coeur de croisement, les caractéristiques métallurgiques et mécaniques de ce coeur de croisement sont au moins égales à celles d'un coeur de croisement comportant des éléments de raccordement tels que décrits dans le brevet français 2.346.495.

D'autres essais de la Société demanderesse ont également montré que l'acier austénitique au manganèse utilisé pour la réalisation du coeur de croisement reste pratiquement insensible au x échauffements dus au soudage des éléments de raccordement, si les éléments d'alliage de cet acier sont

4 0070774

maintenus dans des intervalles bien déterminés.

C'est ainsi que le carbone doit être compris entre 0,7 et 0,9 %, le silicium inférieur à 1 %, le manganèse compris entre 13 et 15 % et le molybdène entre 1 et 1,8 %.

Pour toutes les nuances comprises dans ces intervalles de composition l'élaboration du coeur de croisement muni de ses éléments de raccordement et le soudage de celui-ci sur des rails en acier au carbone peuvent être réalisés sans précautions particulières.

On a également élaboré des appareils de voie et des éprouvettes sous forme de barreaux à section carrée, en utilisant, comme précédemment, l'acier austénitique au manganèse tel que défini ci-dessus et des éléments de raccordement en acier au chrome, nickel, manganèse comportant une plus forte proportion de manganèse et une plus faible proportion de nickel que les éléments de raccordement tels que mentionnés ci-dessus.

De tels éléments de raccordement en acier contenant 0,2 à 0,8 % de carbone, 7 à 11 % de manganèse, 0 à 1 % de silicium, 2 à 6 % de nickel, 19 à 22 % de chrome, 0 à 0,6 % d'azote et 0 à 1 % de niobium présentent une plus grande dureté qui peut être nécessaire dans le cas de voies spéciales à très grande vitesse.

Des essais équivalents à ceux décrits ci-dessus ont été effectués sur des appareils de voie et sur les barreaux d'éprouvette. Ces essais ont montré que les caractéristiques métallurgiques et mécaniques des coeurs de croisement et des barreaux-éprouvettes réalisés par soudage sans traitement thermique intermédiaire sont tout à fait équivalentes aux caractéristiques correspondantes des coeurs de croisement ou barreaux-éprouvettes réalisés suivant l'art antérieur, c'est à dire avec un traitement d'hypertrempe à 1050° avant et après soudage des éléments de raccordement.

Il est possible cependant de faire subir à l'appareil de voie, après soudage des éléments de raccordement, une trempe à une température comprise entre 1080 et 1100° suivie d'un refroidissement à l'eau comme dans le cas des appareils de voie de l'art antérieur en acier à 1,2 % de carbone et 12% de manganèse.

L'invention ne se limite pas aux modes de réalisation qui viennent d'être décrits ; elle en comporte au contraire toutes les variantes.

L'élément de raccordement peut être élaboréet soudé à l'extrémité de la file de roulement du coeur de croisement non seulement par soudage vertical sous laitier, mais encore par soudage vertical avec guide fil fusible ou dépôt à l'arc à l'électrode enrobée ordinaire ou à haut rendement.

Les éléments de raccordement peuvent être soudés sur le coeur de croisement en acier aumanganèse par un procédé de soudage tel que le procédé par étincelage, par alumino-thermie, soudage à l'arc à l'électrode enrobée, ou soudage par bombardement électronique.

Il est possible d'utiliser des éléments de raccordement d'une très faible longueur, ce qui n'était pas le cas dans les dispositifs de l'art antérieur où le coeur de croisement était sensible aux échauffements dus au soudage des éléments de raccordement sur les rails en acier au carbone. Dans l'appareil de voie suivant l'invention, l'élément de raccordement ne sert qu'à éviter le mélange des deux matériaux constituant l'appareil de voie et le rail en acier ordinaire au carbone.

Cet élément de raccordement peut donc être d'une longeur très réduite allant jusqu'à 20 mm.

Inversement on peut également utiliser des éléments de raccordement de longueur plus importante allant par exemple jusqu'à 100 mm.

Cette longueur sera déterminée par les conditions d'exploitation de l'appareil de voie.

## REVENDICATIONS

1.- Procédé de fabrication d'un appareil de voie en acier au manganèse moulé destiné à être raccordé à des rails en acier au carbone au moyen d'éléments de raccordement, dans lequel les extrémités libres des files de roulement de l'appareil et l'élément de raccordement ont une section de même profil que les rails à raccorder,

caractérisé par le fait :

- qu'on réalise l'appareil de voie par moulage d'un acier contenant 0,7 à 0,9 % de carbone, moins de 1 % de silicium, de 13 à 15 % de manganèse et de 1 à 1,8 % de molybdène en plus du fer et des impuretés inévitables,

- et qu'on soude, à l'extrémité des files de roulement de l'appareil de voie, à l'état brut de moulage, des éléments de raccordement en un acier contenant principalement du chrome, du nickel et du manganèse, l'appareil de voie étant alors dans un état permettant son raccordement aux rails, sans traitement thermique ultérieur à l'opération de soudage des éléments de raccordement.

2.- Procédé de fabrication suivant la revendication1, caractérisé par le fait que l'élément de raccordement est en un acier contenant 0 à 0,15 % de carbone, 0,5 à 1,5 % de manganèse, 0 à 1 % de silicium, 19 à 22 % de nickel, 24 à 28 % de chrome et de 0 à 0,5 % de molybdène en plus du fer et des impuretés inévitables.

3.- Procédé de fabrication suivant la revendication 1, caractérisé par le fait que l'élément de raccordement est en un acier contenant 0,2 à 0,8 % de carbone, 7 à 11 % de manganèse, 0 à 1 % de silicium, 2 à 6 % de nickel, 19 à 22 % de chrome, 0 à 0,6 % d'azote et 0 à 1 % de niobium en plus du fer et des impuretés inévitables.

4.- Procédé de fabrication suivant l'une quelconque des revendications 1, 2 et 3, caractérisé par le fait que les éléments de raccordement sont élaborés et soudés à l'extrémité des files de roulement par soudage vertical sous laitier.

5.- Procédé de fabrication suivant l'une quelconque des revendications 1, 2, 3 et 4, caractérisé par le fait que les éléments de raccordement ont une longueur comprise entre 20 et 100 mm.

6.- Procédé de raccordement à des rails en acier au carbone d'un appareil de voie obtenu par le procédé suivant l'une quelconque des revendications 1, 2, 3, 4 et 5, caractérisé par le fait :

- qu'on soude les éléments de raccordement de l'appareil de voie aux rails, sans opérer de traitement thermique ni avant ni après cette opération de soudage, sur l'appareil de voie.

7.- Procédé de raccordement suivant la revendication 6, caractérisé par le fait qu'on soude les éléments de raccordement aux rails par étincelage.

# 0070774

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 23 K 35/00 |
| Y,D | FR-A-2 407 987 (CREUSOT-LOIRE) *Revendication; page 1, lignes 1-3; page 1, lignes 22-26* | 1 | E 01 B 7/12<br>C 22 C 38/04<br>C 22 C 38/40<br>C 22 C 38/58 |
| | --- | | |
| Y,D | FR-A-2 346 495 (CREUSOT-LOIRE) *Revendication 1* | 2 | |
| | --- | | |
| Y,D | FR-A-2 350 424 (CREUSOT-LOIRE) *Revendication 1* | 3 | |
| | --- | | |
| A | FR-A-2 400 409 (VEREINIGTE ÖSTERREICHISCHE EISEN- UND STAHLWERKE ALPINE-MONTAN AKTIENGESELLSCHAFT) *Revendications 1,6* | 1 | |
| | ----- | | **DOMAINES TECHNIQUES RECHERCHES (Int. Cl. ³)** |
| | | | B 23 K 35/00<br>C 22 C 38/04<br>C 22 C 38/40<br>C 22 C 38/58<br>E 01 B 7/12<br>E 01 B 7/10 |

Le présent rapport de recherche a été établi pour toutes les revendications

| Lieu de la recherche | Date d'achèvement de la recherche | Examinateur |
|---|---|---|
| LA HAYE | 25-10-1982 | LIPPENS M.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82